# EUROPÄISCHE PATENTSCHRIFT

(11) **EP 0 598 941 B1**
(45) Veröffentlichungstag und Bekanntmachung des Hinweises auf die Patenterteilung: **22.01.1997**
(21) Anmeldenummer: 92120153.9
(22) Anmeldetag: 26.11.1992
(51) Int. Cl.: F02B 23/08

(54) **Fremdgezündete Brennkraftmaschine mit einem im Kolben zugeordneten Brennraum**
Spark ignition internal combustion engine with combustion space arranged in piston
Moteur à combustion interne à allumage commandé pourvu d'une chambre de combustion dans le piston

(43) Veröffentlichungstag der Anmeldung: 01.06.1994
(73) Patentinhaber: AVL Gesellschaft für Verbrennungskraftmaschinen und Messtechnik mbH.Prof.Dr.Dr.h.c. Hans List, A-8020 Graz (AT)
(72) Erfinder: Kapus, Paul, Dr., A-8045 Graz (AT); Chmela, Franz, Dipl.-Ing. Dr., A-8043 Graz (AT)
(74) Vertreter: Krause, Walter, Dr. Dipl.-Ing.

(56) Entgegenhaltungen:
- EP-A- 0 261 538
- DE-A- 3 004 580
- FR-A- 1 279 646
- GB-A- 2 169 656
- GB-A- 2 215 400
- PATENT ABSTRACTS OF JAPAN vol. 10, no. 83 (M-466)(2140) 2. April 1986 & JP-A-60 224 920
- Paper 34 "Development of a medium duty,turbocharged,lean burn natural gas engine",Tagung NGV, Göteborg,21 bis 25 September 1992, Seite 303 bis 315

## Beschreibung

Die Erfindung betrifft eine fremdgeründete Brennkraftmaschine mit zumindest einem hin- und hergehenden Kolben, mit einem im Kolben angeordneten Brennraum, welcher durch bis zum Brennraumboden reichende Einschnürungen in zumindest zwei Teilbrennräume unterteilt ist, wobei die Teilbrennräume in Draufsicht asymmetrisch ausgebildet und drehsymmetrisch zu einer durch den Brennraummittelpunkt gehenden, parallel zur Kolbenlängsachse liegenden Brennraumachse angeordnet sind, wobei die Teilbrennräume eine Ausbuchtung aufweisen, so daß die Breite des Teilbrennräume von der breitesten stelle an der Ausbuchtung in Richtung zum Brennraummitelpunkt hin bis zu einer engsten stelle kontinuerlich abnimmt, mit einem minimalen Abstand im Bereich der Einschnürungen der Brennraumwand und einem maximalen Abstand in konkav ausgebildeten Bereichen der Brennraumwand, jeweils gemessen in einer knapp unterhalb des Kolbenbodens liegenden Schnittebene, ausgehend von der Brennraumachse, wobei das Verhältnis minimaler Abstand zu maximaler Abstand größer gleich 0,2 ist, und wobei die Brennraumwand im Bereich der Einschnürungen konvex geformt ist.

Bei extremem Magerbetrieb lassen sich bei Gas-Motoren ähnlich niedrige Stickoxidemissionen wie bei stöchiometrischem Betrieb mit Dreiwegkatalysator, allerdings mit höherem inneren Wirkungsgrad und niedrigerer thermischer Bauteilbelastung erreichen.

Magere Gemische brennen jedoch mit kleinerer Geschwindigkeit, was thermodynamisch nachteilig ist und zu Schwankungen im Verbrennungsdruckverlauf von Zyklus zu Zyklus führt. Ein wirksames Mittel zur Erhöhung der Brenngeschwindigkeit ist die Steigerung des turbulenten Anteils der Zylinderinnenströmung.

Aus dem Paper 34 "Development of a medium duty, turbocharged, lean burn natural gas engine", Tagung NGV, Göteborg, 21. bis 25. September 1992, Seite 303 bis 315, ist beispielsweise die sogenannte Nebula-Brennraumkammer einer Brennkraftmaschine der eingangs beschriebenen Art der Firma Ricardo bekannt, mit welcher hohe Ladungsturbulenzen zum Zeitpunkt der Zündung und während der Verbrennung erzeugt werden können. Die Turbulenzen werden im Nebula-Brennraum durch zwei im gleichen Drehsinn zum Zündmittelpunkt gerichtete Strömungen im Brennraum erzeugt. Bis zu einer Luftzahl λ = 1,6 ist ein befriedigender Magerbetrieb möglich. Bei weiterer Abmagerung reicht die Brenngeschwindigkeit für eine sichere Verbrennung des Gemisches nicht mehr aus. Die Turbulenz kann aber mit den in der Nebula-Brennkammer wirksamen, zum Brennraummittelpunkt gerichteten, Hauptströmungen nicht mehr bedeutend verbessert werden.

Bei direkt einspritzenden Motoren für fremdzuzündende Kraftstoffe wirkt sich eine hohe Ladungsturbulenz im Zylinder günstig auf die Abgasemissionen aus.

Aufgabe der Erfindung ist es, das Turbulenzniveau der Zylinderinnenströmung gegenüber der Nebula-Brennkammer weiter zu steigern.

Erfindungsgemäß wird dies dadurch erreicht, daß das Verhältnis des minimalen Abstandes im Bereich der Einschnürungen zum Kolbenhalbmesser kleiner gleich 0,5 ist, wobei die Brennraumwand im Bereich der Einschnürungen konvex geformt ist, sowie daß das Verhältnis des maximalen Abstandes zum Kolbenhalbmesser größer gleich 0,7 ist.

Durch diese besondere Gestaltung des sich im Kolbenboden befindenden Brennraumes werden den turbulenzerzeugenden Strömungsbewegungen der Nebula-Brennkammer noch weitere, im wesentlichen gegeneinander gerichtete, als Quetschströmung ausgebildete Ladungsbewegungen hinzugefügt, die das Turbulenzniveau weiter anheben. Dadurch wird einerseits erreicht, daß die Strömungsgeschwindigkeit in der Nähe des Brennraummittelpunktes so niedrig gehalten wird, daß die initiale Flammenentstehung nicht durch Ausblasen des Zündfünkens der dort angebrachten Zündkerze bzw. Löschen der Flammenfront beeinträchtigt wird. Andererseits wird bei Abwärtsbewegung des Kolbens durch die verstärkte, zur Zylinderwand gerichtete Strömung die Flammenausbreitung deutlich beschleunigt. Bei direkt einspritzenden Motoren für fremdzuzündende Kraftstoffe wird durch die hohe Turbulenz im Zylinderraum neben dem beim Gas-Motor genannten vorteilhaften Effekt auf den Brennverlauf des Gemisches die Verdampfung des filmartig an der Brennraumwand angelagerten Kraftstoffes beschleunigt.

Um die Quetschströmung im Interesse noch größerer Turbulenz weiter zu verstärken, ist in weiterer Ausbildung der Erfindung vorgesehen, daß die Brennraumwand zumindest im Bereich der Einschnürungen überhängend ausgeführt ist, wodurch eine Vergrößerung der Quetschfläche erreicht wird.

In einer Ausführungsvariante ist vorgesehen, daß der Brennraumboden konvex ausgeführt ist, wobei das Verhältnis minimale Brennraumtiefe im Bereich des Brennraummittelpunktes zur maximalen Brennraumtiefe mindestens 0,3 beträgt. Dadurch wird erreicht, daß die sonst dort befindliche Zylinderladung in den Bereich größerer Turbulenz verdrängt wird.

Die Asymmetrie der einzelnen Teilbrennräume läßt sich erfindungsgemäß dadurch realisieren, daß die einzelnen Teilbrennräume bezüglich der Brennraumachse je eine drehsymmetrisch angeordnete Ausbuchtung aufweisen. Die Ausbuchtungen entstehen dadurch, daß die Wände der einzelnen Teilbrennräume durch Kurvenzüge gebildet werden, die die Einlaßdrallströmung aus Zylinderwandnähe in zum Brennraummittelpunkt gerichtete Teilströmungen umlenken, welche auf Quetschströmungen aus den Bereichen der Einschnürungen gerichtet sind.

Die Erfindung läßt sich auch auf Brennräume anwenden, welche aus drei Teilbrennräumen bestehen und in Draufsicht eine dreizählige Symmetrie aufweisen.

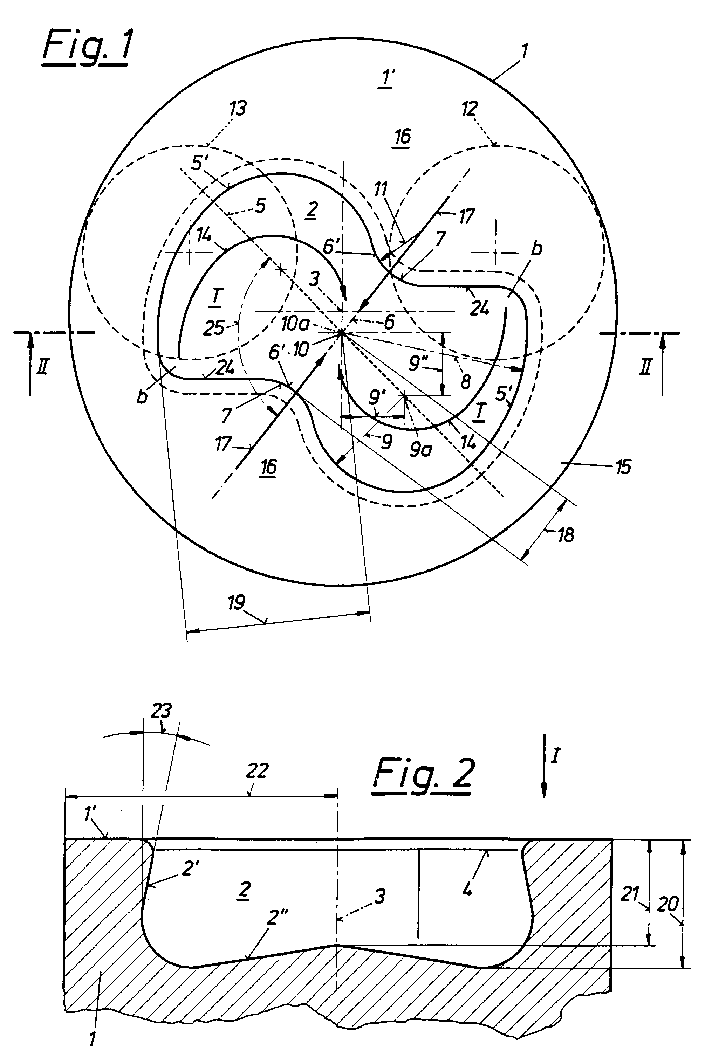

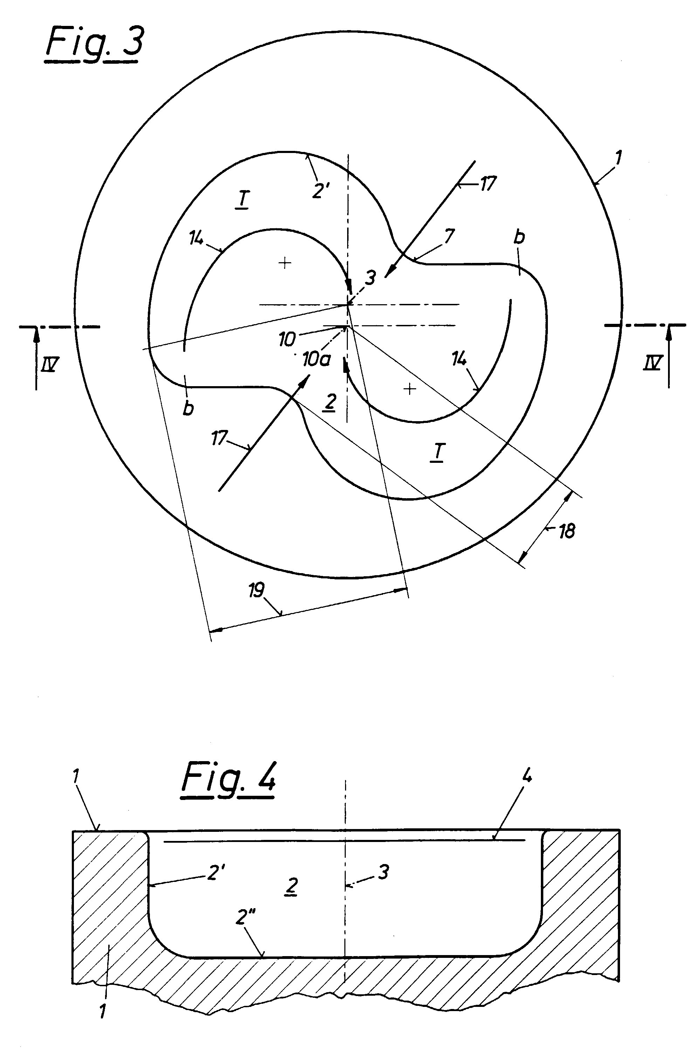

Die Erfindung wird im folgenden anhand von Zeichnungen näher erläutert. Figur 1 zeigt eine Draufsicht auf den Kolben 1 in Richtung I in Figur 2. Figur 2 stellt einen Schnitt durch den Kolbenboden entsprechend der Linie II-II in Figur 1 dar. Die Fig. 3 und 4 bzw. 5 und 6 zeigen Ausführungsvarianten in einer den Fig. 1 und 2 entsprechenden Darstellung.

In den Kolbenboden 1' des Kolbens 1 ist gemäß Fig. 1 und 2 ein Brennraum 2 eingearbeitet, welcher in einer normal auf die Kolbenlängsachse 3 stehenden Schnittebene 4 knapp unterhalb des Kolbenbodens 1' im wesentlichen durch seine Brennraumlängsachse 5 und seine Brennraumquerachse 6 definiert ist. In den Bereichen 6' weist der Brennraum 2 deutlich ausgeprägte Einschnürungen 7 auf, welche den Brennraum in zwei Teilbrennräume T unterteilen. Im Bereich 5' der Brennraumlängsachse 5 ist die Brennraumwand 2' in Richtung der Kolbenachse konkav ausgebildet, wobei die Brennraumwand 2' in diesem Bereich den größten Krümmungsradius 8 aufweist. Die Brennraumwände 2' sind in diesem Ausführungsbeispiel bezüglich des Brennraummittelpunktes 10 punktsymmetrisch geformt. Die Einschnürungen 7 in den Bereichen 6' sind konvex zum Brennraummittelpunkt 10 ausgebildet und durch einen Krümmungsradius 11 gekennzeichnet. Zwei bezüglich des Brennraummittelpunktes 10 punktsymmetrisch gegenüberliegende Übergangsbereiche 24, jeweils vom konkaven Bereich 5' in den konvexen Bereich 6', sind im wesentlichen ebenflächig geformt. Brennraumlängsachse 5 und Brennraumquerachse 6 stehen in einem Winkel 25 zwischen 35° und 145° zueinander geneigt. Mit 9' und 9'' ist die Lage des Krümmungsmittelpunktes 9a bezüglich des Brennraummittelpunktes 10 gekennzeichnet. Die Brennraumkontur kann aus einem oder mehreren Kreisbögen oder allgemeinen Kurvenzügen zusammengesetzt sein. Im Ausführungsbeispiel nach Fig. 1 befindet sich der Brennraummittelpunkt 10 in der Entfernung 10' von der Kolbenlängsachse 3. Das Einlaßventil 12 und das Auslaßventil 13 sind durch strichlierte Linien angedeutet.

Die einzelnen Teilbrennräume T weisen in bezug auf die Brennraumachse 10a je eine drehsymmetrisch angeordnete Ausbuchtungen b auf. Durch die besondere Ausbildung des Brennraumes werden den Ladungsströmungen 14 aus dem Bereich der Quetschflächen 16 noch weitere, als Quetströmungen ausgebildete Ladungsströme gemäß Pfeilen 17 hinzugefügt.

Maßgebend für die Ausbildung einer befriedigenden Turbulenz ist der minimale Abstand 18 der Brennraumwand 2' im Bereich der Einschnürungen 7 sowie der maximale Abstand 19 der Brennraumwand 2', jeweils gemessen von der Brennraumachse 10a, im Verhältnis zum Kolbenhalbmesser 22. Das Verhältnis minimaler Abstand 18 zu Kolbenhalbmesser 22 soll dabei kleiner gleich 0,5 und das Verhältnis maximaler Abstand 19 zu Kolbenhalbmesser 22 größer 0,7 sein. Bei der Ausführung gemäß Fig. 1 und 2, wo der Brennraumboden 2' konvex ausgebildet ist, soll auch das Verhältnis minimale Brennraumtiefe 21 zur maximalen Brennraumtiefe 20 mindestens 0,3 betragen. Durch die so ausgebildeten, relativ zum Kolbenquerschnitt 15 großen Quetschflächen 16, werden die zusätzlichen Quetschströmungen 17 erzeugt. Der konvex ausgebildete Kolbenboden 2" verdrängt hier die Zylinderladung in Bereiche größerer Turbulenz.

Die Ladungsströmungen 14 und 17 können noch gesteigert werden, wenn die Brennraumwand 2' in einem Winkel 23 von ca. 10° zur Kolbenlängsachse 3 überhängend ausgeführt ist.

Die Ausführungsvariante gemäß Fig. 3 und 4 stellt eine vereinfachte Brennraumgestaltung in Anlehnung an die Ausführung nach Fig. 1 und 2 dar. Bei dieser Ausführung ist der Brennraumboden 2" eben ausgeführt und die Brennraumwand 2' zeigt keinen Überhang.

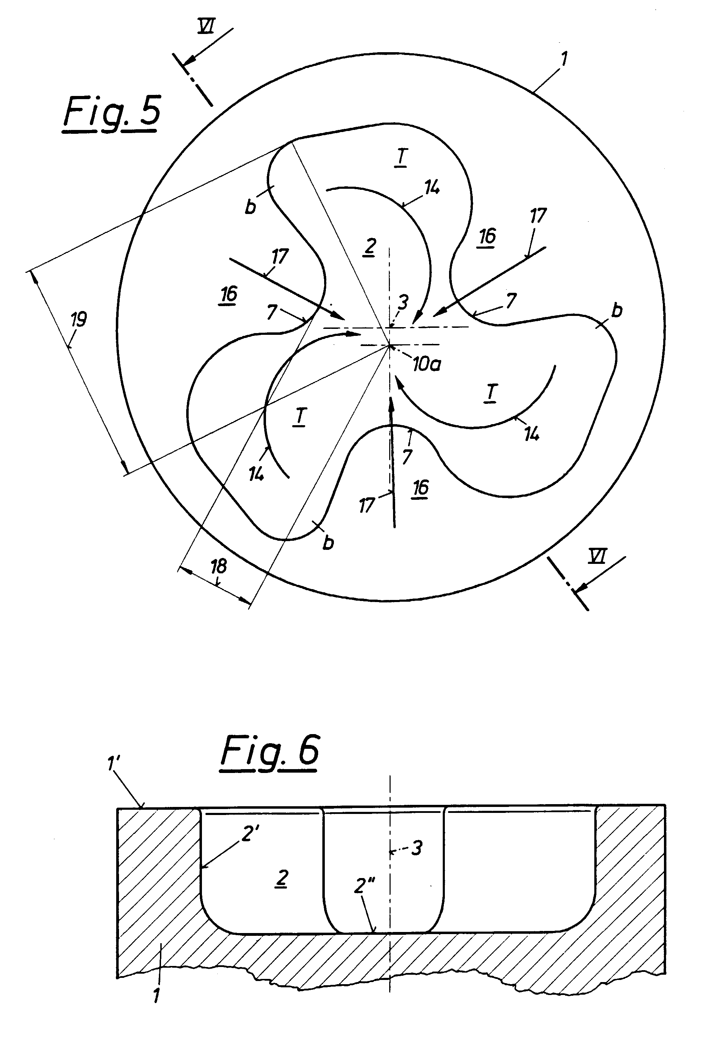

Bei der Ausführungsvariante gemäß Fig. 5 und 6 weist der Brennraum insgesamt drei Teilräume T auf, welche in einer dreizähligen Symmetrie angeordnet sind. Auch hier sind drehsymmetrisch angeordnete Ausbuchtungen b ausgeformt, wodurch sich im Zusammenhang mit den Einschnürungen 7 Ladungsströmungen 14 und Quetschströmungen 17 ausbilden, welche im Brennraummittelpunkt 10 aufeinandertreffen. Für die Verhältnisse des minimalen Abstandes 18 bzw. des maximalen Abstandes 19 zum Kolbenhalbmesser 22 gelten die bereits oben definierten Bedingungen.

## Patentansprüche

1. Fremdgezündete Brennkraftmaschine mit zumindest einem hin- und hergehenden Kolben (1), mit einem im Kolben (1) angeordneten Brennraum (2), welcher durch bis zum Brennraumboden (2'') reichende Einschnürungen (7) in zumindest zwei Teilbrennräume (T) unterteilt ist,
wobei die Teilbrennräume (T) in Draufsicht asymmetrisch ausgebildet und drehsymmetrisch zu einer durch den Brennraummittelpunkt (10) gehenden, parallel zur Kolbenlängsachse (3) liegenden Brennraumachse (10a) angeordnet sind,
wobei die Teilbrennräume (T) eine Ausbuchtung (b) aufweisen, so daß die Breite der Teilbrennräume (T) von der breitesten Stelle an der Ausbuchtung in Richtung zum Brennraummittelpunkt (10) hin bis zu einer engsten Stelle kontinuerlich abnimmt,
wobei ein minimaler Abstand (18) im Bereich der Einschnürungen (7) der Brennraumwand (2') und ein maximaler Abstand (19) in konkav ausgebildeten Bereichen der Brennraumwand (2'), jeweils in einer knapp unterhalb des Kolbenbodens (1') liegenden Schnittebene (4), ausgehend von der Brennraumachse (10a) gemessen wird, wobei das Verhältnis minimaler Abstand (18) zu maximaler Abstand (19) größer gleich 0,2 ist,
wobei die Brennraumwand (2') im Bereich der Einschnürungen (7) konvex geformt ist,
dadurch gekennzeichnet, daß das Verhältnis des maximalen Abstandes (19) zum Kolbenhalbmesser (22) größer gleich 0,7 ist und daß das Verhältnis des minimalen Abstandes (18) im Bereich der Einschnürungen (7) zum Kolbenhalbmesser (22) kleiner gleich 0,5 ist.

2. Brennkraftmaschine nach Anspruch 1, **dadurch gekennzeichnet,** daß die Brennraumwand (2') zumindest im Bereich der Einschnürungen (7) überhängend ausgeführt ist.

3. Brennkraftmaschine nach Anspruch 1 oder 2, **dadurch gekennzeichnet,** daß der Brennraumboden (2") konvex ausgeführt ist, wobei das Verhältnis minimale Brennraumtiefe (21) im Bereich des Brennraummittelpunktes (10) zur maximalen Brennraumtiefe (20) mindestens 0,3 beträgt.

4. Brennkraftmaschine nach einem der Ansprüche 1 bis 3, **dadurch gekennzeichnet,** daß drei Teilräume (T) vorgesehen sind, welche in Draufsicht eine dreizählige Symmetrie aufweisen.

## Claims

1. Spark-ignited internal combustion engine with at least one reciprocating piston (1), in which a combustion chamber (2) is located, which is divided into two or more partial chambers (T) by restrictions (7) extending to the bottom (2") of the combustion chamber,
where said partial chambers (T) are shaped asymmetrically in a view from above and are arranged rotation-symmetrically relative to an axis (10a) passing through the centre (10) of the combustion chamber and being parallel to the longitudinal axis (3) of the piston (1), and
where the partial chambers (T) each have a recess (b), such that the width of the partial chambers (T), as measured towards the centre (10) of the combustion chamber, decreases continuously from the point of largest width at the recess to a narrowest region, and
where, departing from the axis (10a) of the combustion chamber, a minimum distance (18) is measured in the area of the restrictions (7) of the wall (2') of the combustion chamber, and a maximum distance (19) in concave-shaped areas of said wall (2'), each in a cutting plane (4) directly below the piston head (1'), the ratio between minimum distance (18) and maximum distance (19) being greater or equal 0.2, and
where the wall (2') of the combustion chamber has a convex shape in the area of the restrictions (7),
**characterised in that** the ratio between the maximum distance (19) and the piston radius (22) is greater or equal 0.7, and the ratio between the minimum distance (18) in the area of the restrictions (7) and the piston radius (22) is smaller or equal 0.5.

2. Internal combustion engine according to claim 1, **characterised in that** the wall (2') of the combustion chamber is inwardly inclined, at least in the area of the restrictions (7).

3. Internal combustion engine according to claim 1 or 2, **characterised in that** the bottom (2") of the combustion chamber has a convex shape, the ratio between minimum depth (21) at the centre (10) of the combustion chamber (2) and maximum depth (20) being at least 0.3.

4. Internal combustion engine according to any of claims 1 to 3, **characterised in that** three partial chambers (T) are provided, which have a three-fold symmetry in a view from above.

## Revendications

1. Moteur à combustion interne à allumage commandé comportant au moins un piston déplacé en un mouvement alternatif, avec une chambre de combustion (2) disposée dans le piston (1) et subdivisée en au moins deux chambres de combustion partielles (T) au moyen d'étranglements (7) allant jusqu'au fond (2") de la chambre de combustion,
les chambres de combustion partielles (T) étant asymétriques lorsqu'on les observe en vue de dessus et répondant à une symétrie de rotation par rapport à un axe (10a) de chambre de combustion passant par le centre (10) de la chambre de combustion et parallèlement à l'axe longitudinal (3) du piston,
les chambres de combustion partielles (T) présentant un bombement (6) de manière que la largeur des chambres de combustion partielles (T) allant en diminuant de façon continue depuis le point le plus large du bombement, en allant dans la direction du centre (10) de la chambre de combustion, jusqu'à un point d'étroitesse maximale,
un espacement minimal (18), dans la zone des étranglements (7) de la paroi (2') de chambre de combustion et un espacement maximal (19) dans les zones concaves de la paroi (2') de chambre de combustion étant réalisés respectivement dans un plan de coupe (4) placé juste au-dessous du fond de piston (1') en partant de l'axe (10a) de la chambre de combustion, le rapport entre l'espacement minimal (18) et l'espacement maximal (19) étant supérieur ou égal à 0,2,
la paroi (2') de la chambre de combustion étant convexe dans la zone des étranglements (7),
caractérisé en ce que le rapport entre l'espacement maximal (19) et le diamètre (22) du piston est supérieur ou égal à 0,7, et en ce le rapport entre l'espacement minimal (18) dans la zone des étranglements (7) et le diamètre (22) du piston est inférieur ou égal à 0,5.

2. Moteur à combustion interne selon la revendication 1, caractérisé en ce que la paroi (2') de la chambre de combustion est réalisée en surplomb au moins dans la zone des étranglements (7).

3. Moteur à combustion interne selon la revendication 1 ou 2, caractérisé en ce que le fond (2") de la chambre de combustion est convexe, le rapport entre la profondeur minimale (21) de la chambre de combustion dans la zone du centre (10) de la chambre de combustion et la profondeur maximale (20) de la chambre de combustion étant d'au moins 0,3.

4. Moteur à combustion interne selon l'une des revendications 1 à 3, caractérisé en ce que sont prévues trois chambres partielles (T) qui ont en vue de dessus une symétrie de répétition en trois exemplaires à 120° par rapport à un axe.
